# FASCICULE DE BREVET EUROPEEN

(11) **EP 0 487 360 B1**
(45) Date de publication et mention de la délivrance du brevet: **15.03.1995**
(21) Numéro de dépôt: 91402559.8
(22) Date de dépôt: 25.09.1991
(51) Int. Cl.: H01R 13/64

(54) **Connecteur électrique à détrompeur et son application notamment aux moteurs électriques**
Elektrischer Steckverbinder mit Vorrichtung zur Verhinderung einer falschen Kupplung und seine Anwendung insbesondere bei elektrischen Motoren
Electrical connector with means for preventing incorrect coupling and its application especially to electric motors

(30) Priorité: 16.11.1990 FR 9014317
(43) Date de publication de la demande: 27.05.1992
(73) Titulaire: ECIA - EQUIPEMENTS ET COMPOSANTS POUR L'INDUSTRIE AUTOMOBILE, F-25400 Audincourt (FR)
(72) Inventeur: Gassmann, Jean-Marie, F-90500 Beaucourt (FR)
(74) Mandataire: Polus, Camille

(56) Documents cités:
- EP-A- 0 123 590
- DE-A- 2 513 640
- US-A- 3 137 535
- US-A- 4 867 699

## Description

L'invention concerne les industries électriques et a plus particulièrement pour objet un connecteur électrique perfectionné à détrompeur apte à être utilisé notamment pour la liaison électrique automatique par exemple des plaques porte-balais de moteurs électriques à courant continu.

En particulier, l'invention concerne un connecteur selon la première partie de la revendication 1 (voir par exemple US-A-3 137 535).

Comme on le sait, de nombreux secteurs industriels utilisent des "petits" moteurs électriques à courant continu notamment à collecteur. C'est notamment le cas de l'industrie automobile qui se sert de nombreux "petits" moteurs de puissance "restreinte" pour entraîner, par exemple, des essuie-glaces, des lève-vitres, des moto-ventilateurs, etc., de véhicules.

Une des difficultés que l'on rencontre avec ce type de moteurs concerne la liaison des circuits notamment avec les balais qui, avec le collecteur, assurent la commutation dans de nombreux cas actuellement.

Il faut non seulement que la qualité de la continuité de la liaison électrique soit assurée mais il faut aussi que celle-ci soit faite en respectant les polarités. Quand on opère manuellement et que les connexions sont conduites par des opérateurs, ceux-ci de par leur agilité, leur entraînement et leur réflexion sont aptes à détecter des anomalies d'orientation qui conduiraient à un montage défectueux puisque, en général, le respect des polarités est assuré par des dissymétries de forme.

La difficulté grandit notablement lorsqu'on veut opérer non plus manuellement mais automatiquement à l'aide de robots ou d'automates programmables. En effet, quelle que soit la sensibilité "tactile" dont on dote ces équipements, les efforts d'emmanchement mis en oeuvre pour réunir la fiche et le socle d'un connecteur sont suffisants pour assembler ces deux parties dans la position où elles se présentent et cela en faisant fi des dissymétries de forme adoptées.

Des tentatives faites avec les dissymétries de forme actuellement utilisées pour servir de détrompeur, montrent qu'elles sont notoirement insuffisantes. Avec les solutions actuelles, il est possible d'engager de travers les parties à réunir, et même si l'insertion est faite correctement avec la bonne orientation, les liaisons électriques ne sont pas toujours bonnes. Si la dissymétrie de forme est insuffisante, il peut y avoir un raccordement incorrect avec inversion de la polarité ou bien si la dissymétrie de forme est importante il peut y avoir un raccordement incorrect sans liaison électrique par écrasement des détrompeurs à la suite de déformations des contacts.

Le but de l'invention est de remédier à la plupart des inconvénients brièvement rappelés.

L'invention a pour objet un connecteur électrique perfectionné à détrompeur qui interdit toute tentative d'insertion de la fiche dans son socle si celle-ci n'est pas correctement orientée et qui assure une liaison irréversible et un verrouillage sans faille de la fiche sur le socle une fois l'assemblage terminé.

L'invention a pour objet un connecteur électrique perfectionné fait, entre autres, d'un socle et d'une fiche qui portent des contacts mâles et femelles pour assurer la continuité électrique de circuits et qui est muni d'un verrou pour maintenir ensemble le socle et la fiche lorsqu'ils ont été réunis d'une seule manière autorisée par un détrompeur le socle comprenant un puits avec une ouverture, un fond destiné à recevoir des contacts mâles en saillie dans le puits et des parois qui joignents ces ouverture et fond et qui sont de section droite polygonale.

Ce connecteur électrique perfectionné à détrompeur est remarquable en ce que le socle comprend un détrompeur qui est saillant sur cette ouverture, qui est porté par deux de ces parois opposées et qui est constitué d'une barre-guide sur l'une de ces deux parois opposées et de deux languettes sur l'autre de ces deux parois opposées, en ce que la fiche comprend un corps dont les faces ont une section droite polygonale et un embout à section droite complémentaire de celle du puits de manière à pouvoir y être inséré et dont l'une des faces est dans le prolongement de l'une des faces du corps et dont les autres faces sont en retrait par rapport aux autres faces du corps de manière à former un épaulement, ces faces du corps et de l'embout dans le prolongement l'une de l'autre étant destinées à coopérer avec les languettes et la face opposée étant destinée à coopérer avec la barre, et en ce que le verrou comprend un logement qui est situé approximativement entre les languettes et qui est muni d'un orifice proche du fond et débouchant sur celui-ci à l'opposé de l'ouverture du puits, et un loquet en lame avec une extrémité configurée en chenal en U dont les deux branches parallèles sont réunies par un pont et dont l'une au moins de celles-ci est munie d'un ardillon à l'intérieur du chenal et dirigée vers le pont et avec une autre extrémité configurée avec une patte présentant un plan incliné et un appui tournés vers le fond, ce verrou étant associé au socle de manière que celle des branches qui portent l'ardillon soit engagée dans le logement et de manière que la lame soit située approximativement entre les languettes avec sa patte dans le prolongement du puits afin que l'appui soit en regard du fond et soit apte à s'engager contre le corps lorsque la fiche est totalement insérée dans le socle.

Un connecteur électrique perfectionné à détrompeur selon l'invention convient bien notamment aux moteurs électriques par exemple à collecteur pour leurs plaques porte-balais.

D'autres caractéristiques de l'invention ressortiront de la lecture de la description et des revendications qui suivent ainsi que de l'examen du dessin annexé, donné seulement à titre d'exemple, où :
- la Figure 1 est une vue en élévation d'un mode de réalisation d'un connecteur électrique perfectionné à détrompeur selon l'invention avec un écorché local;
- la Figure 2 est une vue de face du socle du connecteur de la Figure 1; et
- la Figure 3 est une vue perspective partielle de détail du verrou du connecteur de la Figure 1.

Les connecteurs électriques et notamment ceux utilisés par exemple pour les plaques porte-balais des moteurs électriques à courant continu à collecteur de l'industrie automobile étant bien connus dans la technique, on ne décrira dans ce qui suit, que ce qui concerne directement ou indirectement l'invention. Pour le surplus, le spécialiste de la technique considérée puisera dans les solutions courantes classiques à sa disposition pour faire face aux problèmes particuliers auxquels il est confronté.

Dans ce qui suit, on utilise toujours un même numéro de référence pour identifier un élément homologue quel que soit le mode réalisation.

Pour la commodité de l'exposé, on décrira successivement chacun des constituants d'un connecteur électrique perfectionné à détrompeur selon l'invention avant d'en exposer le montage et le fonctionnement.

Comme on le voit en examinant les figures du dessin, le mode de réalisation dessiné et décrit d'un connecteur électrique perfectionné à détrompeur selon l'invention est fait, entre autres, d'un socle 10 et d'une fiche 20 qui portent des contacts 30 mâles et femelles pour assurer la continuité électrique de circuits, non dessinés. Ce connecteur est muni d'un verrou 40 pour maintenir ensemble le socle et la fiche lorsqu'ils ont été correctement réunis.

Comme on peut l'observer, le socle 10 se compose d'un puits 11 et d'un détrompeur 12.

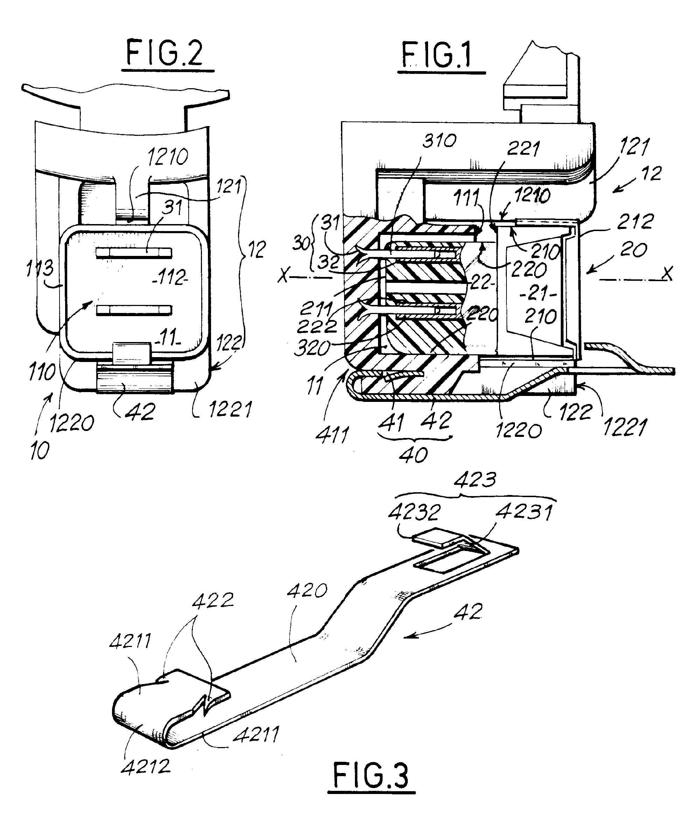

Le puits 11 possède une ouverture 111 et un fond 112 que des parois 113 joignent. Comme on peut l'observer, en particulier sur la Figure 2, une section droite 110 des parois 113, perpendiculairement à l'axe X-X longitudinal du puits, est polygonale et de préférence approximativement carrée. Le fond 112 est destiné à recevoir des contacts 30 et, notamment des contacts mâles 31 par exemple deux. Comme on le voit, ces contacts mâles 31 sont des broches 310 en plaquettes qui sont pratiquement parallèles entre elles et perpendiculaires au fond du puits.

Le détrompeur 12 est saillant par rapport à l'ouverture 111 du puits et à l'opposé de son fond 112. Ce détrompeur comprend, sur deux parois 113 opposées, une barre 121 guide, et des languettes 122 butées. Comme on peut l'observer, la barre 121 est située à l'extérieur du puits pratiquement au milieu d'une paroi 113 alors que les languettes, qui sont elles aussi situées à l'extérieur du puits, sont situées à proximité des sommets de la paroi 113 opposée.

Comme on peut l'observer, la fiche 20 est faite d'un corps 21 et d'un embout 22.

Le corps 21 est délimité par des faces 210 latérales de section droite polygonale, de préférence rectangulaire, par un épaulement 211 et par un dos 212.

L'embout 22 est délimité par des faces 220 latérales de section droite complémentaire de la section droite 110 du puits, et par un façade 221. Comme on peut l'observer, le corps 21 et l'embout 22 sont raccordés de manière que deux de leurs faces 210 et 220 respectives au moins soient dans le prolongement l'une de l'autre alors que les autres faces 220 de l'embout 22 sont en retrait par rapport aux faces 210 du corps 21 de manière à ménager l'épaulement 211 précédemment indiqué. La façade 221 est munie de cuvettes 222 destinées à recevoir par exemple les contacts femelles 32 qui sont configurés à la manière de douilles 320 creuses oblongues. Le nombre des douilles 320, leur disposition et leur orientation sont complémentaires de ceux des broches des contacts mâles qu'elles doivent recevoir.

La distance qui sépare ces barre et languettes est juste un peu plus grande que la largeur du corps rectangulaire mais moindre que la longueur de ce dernier. La hauteur de la saillie de cette barre par rapport à l'ouverture du puits est de l'ordre de grandeur de la longueur de l'embout et la hauteur de la saillie de ces languettes par rapport à cette même ouverture est de l'ordre de grandeur de la longueur du dos. On observera que le dos est un peu plus court que l'embout.

Comme cela apparaît en particulier de l'examen de la Figure 1, le flanc 1210 de la barre 121 guide est destiné à coopérer avec une des faces 210 du corps 21 lorsque la fiche est totalement insérée dans le socle. Les flancs 1220 des languettes 122 sont destinés à coopérer avec la face opposée 210 du corps 21 lorsque la fiche est correctement engagée dans le socle alors que les bouts 1221 de ces languettes sont destinées à coopérer avec l'épaulement 221 lorsque la fiche est mal engagée dans le socle.

Du fait de la section droite rectangulaire du corps 21, ce dernier ne peut être placé entre la barre et les languettes qu'avec deux orientations symétriques possibles : une correcte et une incorrecte. Si l'orientation est la symétrique de celle correcte que l'on vient d'indiquer et que l'on tente cependant d'engager la fiche dans le socle, l'épaulement 221 rencontre les bouts 1221 des languettes : ceci interdit toute poursuite de l'engagement. Ceci résulte du choix de la géométrie et des dimensions précédemment indiquées.

Le verrou 40 comprend un logement 41 et un loquet 42.

Le logement 41 est essentiellement situé entre les languettes 122 et présente un orifice 411 proche du fond 122 et débouchant à l'opposé de l'ouverture 111 du puits 11. Le loquet 42, en forme de lame 420, a une extrémité configurée en chenal 421 en U. Ce chenal comprend des branches 4211 approximativement parallèles réunies par un pont 4212. L'une de ces branches est munie d'au moins un ardillon 422 et de préférence de deux placés par exemple côte à côte. L'autre extrémité de la lame 420 est munie d'une patte 423 avec un plan incliné 4231 et un appui 4232. Comme on peut l'observer, l'ardillon 422 est situé à l'intérieur du chenal 422 et est dirigé vers le pont 4212. Comme on peut aussi l'observer, le plan incliné 4131 et son appui 4232 sont tournés vers le pont 4212.

Ce verrou 40 est associé au socle 10 de manière que celle des branches 4211 qui porte l'ardillon 422 soit engagée dans le logement 41 afin que la lame 420 soit située approximativement entre les languettes 422 et avec sa patte 423 dans le prolongement du puits 11. De la sorte, l'appui 4232 est en regard du fond 112 et est apte à s'engager contre le dos 112 du corps 21 lorsque la fiche 20 est totalement insérée correctement dans le socle 10. En effet, l'appui 4232 se trouve alors pratiquement dans le même plan que les bouts 1221 des languettes 122 et la longueur ou épaisseur du corps 21, c'est-à-dire la distance qui sépare son épaulement 211 de son dos 212 est juste au plus égale à la hauteur de la saillie des languettes.

La lame 420 est flexible et élastique de manière que lorsque la fiche est correctement engagée entre la barre et les languettes, les faces 210 et 220 du corps et de l'embout respectivement, qui sont dans le prolongement l'une de l'autre rencontrent le plan incliné 4231 de la patte 423 pour la repousser momentanément vers l'extérieur.

Le matériau dont est fait le logement 41 est notablement plus tendre que celui dont est fait l'ardillon 422. On utilise de préférence pour le logement une résine synthétique et pour l'ardillon un métal afin que l'ardillon puisse s'incruster de manière irréversible et indéflectible dans le logement.

Du fait des sections droites adoptées et des dimensions relatives choisies, on voit notamment en regardant les figures du dessin que la fiche ne peut être engagée dans le socle qu'avec une seule et unique orientation. Si toutefois, l'orientation de la fiche était erronée d'un demi-tour, toute tentative d'engagement serait vouée à l'échec puisque l'épaulement qui sépare le corps de l'embout de la fiche buterait contre les bouts des languettes.

Le choix des matériaux adoptés est tel qu'ils offrent une résistance à la compression suffisamment forte pour déclencher le fonctionnement d'un détecteur piezosensible associé à un bras manipulateur d'un robot ou d'un automate progammable qui en arrête automatiquement le fonctionnement avant la moindre destruction du connecteur selon l'invention.

Une fois la fiche introduite correctement dans son socle, il est impossible de l'en retirer. En effet, le loquet est maintenu engagé dans le logement par son chenal et la fiche est retenue par l'appui de la lame du verrou. Les positions et les orientations adoptées font que la lame est contrainte en extension lorsqu'on tire sur la fiche pour tenter de la dégager du socle et il y a "arc-boutement" : l'engagement fiche-socle est indéflectible. On observera aussi que du fait de la présence de l'ardillon, le verrou est fixé "imperdable" sur le socle.

Si maintenant on souhaite, délibérément, séparer la fiche du socle du connecteur selon l'invention, il suffit alors de presser sur l'extrémité libre de la lame, dans le sens opposé à celui portant la patte pour placer momentamément l'appui à l'écart du dos du corps de la fiche, à l'encontre de la sollicitation due à l'élasticité inhérente de la lame.

On comprend donc tout l'intérêt du connecteur selon l'invention.

Un tel connecteur trouve une application tout particulièrement judicieuse par exemple pour les plaques porte-balais des moteurs électriques à courant continu à collecteur. Dans un tel cas, les bouts des languettes sont situés par exemple approximativement dans le plan d'une telle plaque.

Il est clair toutefois qu'une telle application n'est pas la seule possible. Le connecteur selon l'invention convient aussi, par exemple, pour les moteurs sans collecteur dits à "commutation électronique"; dans une telle situation, ce connecteur peut être associé, voire intégré pour partie, à toute autre pièce d'un tel moteur notamment à un flasque, à sa carcasse, à son carter.

De même, il est clair que la répartition des contacts mâles et femelles sur le socle et la fiche peut, en tout ou en partie, être permutée.

De ce qui précède, on comprend l'intérêt et les avantages apportés par un connecteur selon l'invention, notamment pour une telle application.

## Revendications

1. Connecteur électrique fait, entre autres, d'un socle (10) et d'une fiche (20) qui portent des contacts (30) mâles (31) et femelles (32) pour assurer la continuité électrique de circuits et qui est muni d'un verrou (40) pour maintenir ensemble le socle et la fiche lorsqu'ils ont été correctement réunis, le socle (10) comprenant un puits (11) avec une ouverture (111), un fond (112) destiné à recevoir des contacts mâles (31) en saillie dans le puits (11) et des parois (113) qui joignent ces ouverture (111) et fond (112) et qui sont de section droite (110) polygonale, caractérisé en ce que le socle comprend un détrompeur (12) qui est saillant sur cette ouverture (111), qui est porté par deux de ces parois (113) opposées et qui est constitué d'une barre (121) guide sur l'une de ces deux parois opposées et de deux languettes (122) sur l'autre de ces deux parois opposées, en ce que la fiche (20) comprend un corps (21) dont les faces (210) ont une section droite polygonale et un embout (22) à section droite complémentaire de celle (110) du puits (11) de manière à pouvoir y être inséré et dont l'une des faces (220) est dans le prolongement de l'une des faces (210) du corps (21) et dont les autres faces (220) sont en retrait par rapport à celles (210) du corps (21) de manière à former un épaulement (211), ces deux faces (210, 220) dans le prolongement l'une de l'autre du corps (21) et de l'embout (22) étant destinées à coopérer avec les languettes (122) et la face opposée (210) étant destinée à coopérer avec la barre (121), et en ce que le verrou (40) comprend un logement (41) qui est situé approximativement entre les languettes (122) et qui est muni d'un orifice (411) proche du fond (112) du socle (10) et débouchant sur celui-ci à l'opposé de l'ouverture (111) du puits (11) et un loquet (42) en lame (420) avec une extrémité configurée en chenal (421) en U dont les deux branches (4211) parallèles sont réunies par un pont (4212) et dont l'une au moins de celles-ci (211) est munie d'au moins un ardillon (422) à l'intérieur du chenal (421) et dirigé vers le pont (4212) et avec une autre extrémité configurée avec une patte (423) présentant un plan incliné (4231) et en appui (4232) tournés vers le fond (4212), ce verrou (40) étant associé au socle (10) de manière que celle des branches (4211) qui portent l'ardillon (422) soit engagée dans le logement (41) et de manière que la lame (420) soit située approximativement entre les languettes (422) avec sa patte (423) dans le prolongement du puits (11) afin que l'appui (4232) soit en regard du fond (112) et soit apte à s'engager contre le corps (21) lorsque la fiche (20) est totalement insérée correctement dans le socle (10).

2. Connecteur électrique selon la revendication 1, caractérisé en ce que la lame (420) est flexible et élastique de manière à pouvoir dégager son appui (4232) du corps (21) d'une fiche (20) insérée dans le socle (10).

3. Connecteur électrique selon la revendication 1 ou 2, caractérisé en ce que le logement (41) est fait en un matériau plus tendre que celui dont est fait l'ardillon (422).

4. Connecteur électrique selon la revendication 3, caractérisé en ce que le logement (41) est fait en une résine synthétique et l'ardillon (422) en un métal afin que l'ardillon puisse s'incruster de manière indéflectible et irréversible dans le logement.

5. Connecteur électrique selon l'une quelconque des revendications 1 à 4, où les contacts mâles (31) sont des broches (310) en plaquettes et les contacts femelles (32) sont des douilles (320) tubulaires oblongues, caractérisé en ce que les plaquettes (310) sont parallèles entre elles et perpendiculaires au fond (112) du puits (11) et en ce que les douilles (320) sont placées dans des cuvettes (221) de l'embout (22).

6. Application d'un connecteur selon l'une quelconque des revendications 1 à 5 à un moteur électrique à courant continu.

## Patentansprüche

1. Elektrischer Verbinder, unter anderem bestehend aus einer Fassung (10) und einem Stecker (20), die männliche (31) und weibliche (32) Kontakte (30) aufweisen, um die elektrische Verbindung zwischen den Schaltungen zu gewährleisten, und mit einem Verschluß (40) zum Zusammenhalten der Fassung und des Steckers, wenn diese korrekt miteineander verbunden sind, wobei die Fassung (10) eine Ausnehmung (11) mit einer Öffnung (111), einem Boden (112) zum Aufnehmen der vorstehenden männlichen Kontakte (31) in der Ausnehmung (11) und Wänden (113) aufweist, die die Öffnung (111) und den Boden (112) miteinander verbinden und einen polygonalen Querschnitt (110) haben, dadurch gekennzeichnet, daß
- die Fassung eine Unverwechselbarkeitseinrichtung (12) aufweist, die auf die Öffnung (111) vorsteht, von zwei gegenüberliegenden Wänden (113) gestützt ist und aus einem an einer der beiden gegenüberliegenden Wände (113) vorgesehenen Führungsriegel (121) und zwei an der anderen der beiden gegenüberliegenden Wände (113) vorgesehenen Laschen (122) besteht,
- der Stecker (20) einen Körper (21), dessen Flächen (210) einen polygonalen Querschnitt haben, und einen Ansatz (22) aufweist, dessen Querschnitt derart komplementär zu demjenigen der Ausnehmung (11) ist, daß er in diese eingeführt werden kann, und dessen eine Fläche (220) sich in der Verlängerung einer der Flächen (210) des Körpers (21) befindet und dessen andere Flächen (220) gegenüber denjenigen (210) des Körpers (21) derart zurückversetzt sind, daß sie eine Schulter (211) bilden, wobei die beiden sich in gegenseitiger Verlängerung befindlichen Flächen (210, 220) des Körpers (21) und des Ansatzes (22) zum Zusammenwirken mit den Laschen (122) bestimmt sind und die gegenüberliegende Fläche (210) zum Zusammenwirken mit dem Riegel (121) vorgesehen ist, und
- der Verschluß (40) aufweist: eine Aufnahme (41), die ungefähr zwischen den Laschen (122) angeordnet ist und in der Nähe des Bodens (112) der Fassung (10) mit einer Öffnung (411) versehen ist, die der Öffnung (111) der Ausnehmung (11) gegenüberliegend in die Fassung mündet, und eine Klinke (42) in Form einer Lamelle (420) mit einem als U-förmiger Kanal (421) ausgebildeten Ende, wobei die beiden parallelen Schenkel (4211) des Kanals durch eine Brücke (4212) miteinander verbunden sind und wenigstens einer (4211) mit wenigstens einer zur Brücke (4212) hin gerichteten Zunge (422) im Inneren des Kanals (421) versehen ist, und mit einem anderen Ende, das mit einer Klaue (423) versehen ist, die eine Schrägfläche (4231) und eine Anlagefläche (4232) aufweist, die dem Verbindungsstück (4212) zugewandt sind,
- wobei der Verschluß (40) derart mit der Fassung (10) verbunden ist, daß derjenige der Schenkel (4211), der die Zunge (422) aufweist, in die Aufnahme (41) eingreift und daß der Streifen (420) ungefähr zwischen den Laschen (422) angeordnet ist, wobei sich die Klaue (423) in der Verlängerung der Ausnehmung (11) befindet, so daß die Anlagefläche (4232) gegenüber dem Boden (112) befindet und an dem Körper (21) angreifen kann, wenn der Stecker (20) vollständig und richtig in die Fassung (10) eingesetzt ist.

2. Elektrischer Verbinder nach Anspruch 1, dadurch gekennzeichnet, daß die Lamelle (420) derart flexibel und elastisch ist, daß die Anlagefläche (4232) vom Körper (21) eines in die Fassung (10) eingesetzten Steckers (20) lösbar ist.

3. Elektrischer Verbinder nach Anspruch 1 oder 2, dadurch gekennzeichnet, daß die Aufnahme (41) aus einem Material besteht, daß weicher ist als das Material der Zunge (422).

4. Elektrischer Verbinder nach Anspruch 3, dadurch gekennzeichnet, daß die Aufnahme (41) aus einem Kunststoffmaterial und die Zunge (422) aus Metall besteht, so daß sich die Zunge unverschiebbar und irreversibel in die Aufnahme einpressen kann.

5. Elektrischer Verbinder nach einem der Ansprüche 1 bis 4, bei dem die männlichen Kontakte (31) plattenförmige Stifte (310) und die weiblichen Kontakte (32) längliche rohrförmige Hülsen (320) sind, dadurch gekennzeichnet, daß die Platten (310) zueinander parallel und zum Boden (112) der Ausnehmung senkrecht verlaufen, und daß die Hülsen (320) in Vertiefungen (221) des Ansatzes (22) angeordnet sind.

6. Verwendung eines Verbinders nach einem der Ansprüche 1 bis 5 bei einem Gleichstrom-Elektromotor.

## Claims

1. An electrical connector comprising, among other parts, a base (10) and a plug (20) which have male (31) and female (32) contacts (30) to ensure electrical circuit continuity and which is provided with a lock (40) for holding the base and the plug together when they are correctly assembled, the base (10) comprising a cavity (11) with an opening (111), a bottom (112) for receiving male contacts (31) projecting into the cavity (11) and walls (113) which link the said opening (111) and bottom (112), and have a polygonal cross-section (110), **characterised in that** the base comprises a mating device (12) which extends beyond the said opening (111), is supported by two of these opposing walls (113) and comprises a guide rail (121) on one of the said two opposing walls and two lugs (112) on the other of these two opposing walls, in that the plug (20) comprises a structure (21) and the surfaces (210) of the structure have a polygonal cross-section and a terminal (22) with a cross-section complementary to the cross section (110) of the cavity (11) so that insertion is possible therein and that one of the surfaces (220) [of the terminal] is within the extension of one of the surfaces (210) of the structure (21) and the other surfaces (220) of the terminal are offset in relation to those (210) of the structure (21) so as to form a shoulder (211) [sic], wherein it is intended that the said two surfaces (210, 220) in the extension from one [surface] to the other of the structure (21) and of the terminal (22), act together with the lugs (122) and the opposing surface (210) acts together with the rail (121), and in that the lock (40) comprises a housing (41) situated roughly between the lugs (122) and provided with an opening (411) near to the bottom (112) of the base (10) and opening thereonto opposite the opening (111) of the cavity (11), and a latch (42) in the form of a metal sheet (420) with one end arranged in a U shape channel (421), and the two parallel arms (4211) of the U are joined by a bridge (4212) and at least one of these arms (211) is provided with at least one catch (422) inside the channel (421) and directed towards the bridge (4212) and with another end arranged with a clip (423) having an inclined plane (4231) and a support (4232), which are turned towards the bottom (4212), the said lock (40) being attached to the base (10) in such a way that one of the arms (4211) which have the catch (422) is engaged in the housing (41) and in such a way that the metal sheet (420) is situated roughly between the lugs (422) [sic] with the clip (423) thereof in the extension of the cavity (11) so that the support (4232) is opposite the bottom (112) and is suitable to fit against the structure (21) when the plug (20) is completely inserted correctly into the base (10).

2. An electrical connector according to Claim 1, **characterised in that** the metal sheet (420) is flexible and resilient in such a way that it can disengage its support (4232) from the structure (21) of a plug (20) inserted into the base (10).

3. An electrical connector according to Claim 1 or 2, **characterised in that** the housing (41) is made of a much softer material than the one used for the catch (422).

4. An electrical connector according to Claim 3, **characterised in that** the housing (41) is made of a synthetic resin and the catch (422) of a metal so that the catch can implant itself so as to be indeflectiblc and irreversible in the housing.

5. An electrical connector according to one of Claims 1 to 4, wherein the male contacts (31) are plate-shaped pins (310), and the female contacts (32) are oblong tubular sockets (320), **characterised in that** the plates (31) are parallel between them and perpendicular to the bottom (112) of the cavity (11) and, in that the sockets (320) are positioned in the trays (221) [sic] of the terminal (22).

6. An application of a connector according to one of Claims 1 to 5 to an electric motor with direct current.
